# EUROPÄISCHE PATENTSCHRIFT

(11) **EP 0 628 453 B1**
(45) Veröffentlichungstag und Bekanntmachung des Hinweises auf die Patenterteilung: **04.02.1998**
(21) Anmeldenummer: 94108460.0
(22) Anmeldetag: 01.06.1994
(51) Int. Cl.: B60R 13/06, B60J 10/00, F16B 5/12

(54) **Steckprofil**
Plug profile
Profil de connexion

(30) Priorität: 09.06.1993 DE 4319259
(43) Veröffentlichungstag der Anmeldung: 14.12.1994
(73) Patentinhaber: Trier, Lothar, D-96247 Michelau (DE)
(72) Erfinder: Trier, Lothar, D-96247 Michelau (DE)
(74) Vertreter: Prechtel, Jörg, Dipl.-Phys. Dr.

(56) Entgegenhaltungen:
- EP-A- 0 553 018
- DE-A- 2 631 568
- DE-A- 3 114 157
- DE-A- 3 641 653
- DE-A- 4 318 719
- GB-A- 2 160 920
- PATENT ABSTRACTS OF JAPAN vol. 9, no. 22 (M-354) (1745) 30. Januar 1985 & JP-A-59 167 348 (KINUGAWA GOMU KOGYO) 20. September 1984

## Beschreibung

Die vorliegende Erfindung bezieht sich auf ein Steckprofil aus Kunststoff zur Anbringung an einem Bauteil, insbesondere Fahrzeugbauteil, umfassend: wenigstens eine langgestreckte Steckprofilwand, wenigstens einen an die wenigstens eine Steckprofilwand angeformten, sich in Längsrichtung der Steckprofilwand erstreckenden Anlagesteg, wobei der wenigstens eine Anlagesteg einen an der wenigstens einen Steckprofilwand angeformten Sockelbereich, einen sich an den Sockelbereich anschließenden Biegebereich sowie einen sich an den Biegebereich anschließenden, eine Anlagefläche zur Anlage an den Bauteil aufweisenden Endbereich umfaßt und wobei der Endbereich bei am Bauteil angebrachtem Steckprofil in zur Steckrichtung des Steckprofils entgegengesetzter Richtung weist und am Bauteil anliegt, um beim Abziehen des Steckprofils vom Bauteil in den Endbereich mit zunehmender Kraft gegen das Bauteil zu drücken.

Ein derartiges Steckprofil ist aus der JP-A-59 167 348 bekannt. Dieses bekannte Steckprofil weist einen im wesentlichen U-förmigen Querschnitt auf, und an der Innenoberfläche der Beine der U-Form ist eine Mehrzahl von Anlagestegen angeformt. Die Anlagestege umfassen jeweils einen Sockelbereich, mit welchem sie an die Beine der U-Form angeformt sind, einen Biegebereich und einen Endbereich mit einer Anlagefläche zur Anlage an einem Bauteil. Bei Aufschieben dieses bekannten Steckprofils, beispielsweise auf die Umfangskante miteinander verschweißter Metallteile, biegen sich die Anlagestege in ihrem Biegebereich entgegen der Schieberichtung des Steckprofils. Bei dem Versuch, dieses Steckprofil vom Metallteil wieder abzuziehen, werden durch die Formgebung der Anlagestege diese auf das Bauteil zu gepreßt und eine selbsthemmende Wirkung wird erzeugt.

Insbesondere in der Automobilindustrie ist es bekannt, die Umfangsränder von Kraftfahrzeugbauteilen, wie z.B. die Ränder von Blechteilen oder mehrerer entlang ihrer Umfangsränder aneinander geschweißter Blechteile, durch Kunststoffprofile abzudecken, um somit einerseits ein ansprechendes optisches Erscheinungsbild des Kraftfahrzeugs zu gewahrleisten und andererseits die Verletzungsgefahr an scharfen Metallrändern zu beseitigen. Ferner können an diesen Profilen weitere Funktionsteile wie z.B. Dichtungen oder dgl., angebracht sein.

Aus der GB-A-2 160 920 ist ein Dichtungsstreifen bekannt, auf welchem Klebeschichten angebracht sind, mit welchen dieser auf einem Bauteil angebracht werden kann. Dieser Dichtungsstreifen weist einen zentralen Körperabschnitt auf mit daran schwenkbar angeformten Flügeln. Durch Biegen der Flügel aufeinander zu wird eine U-Form geschaffen, in welcher dann ein Bauteil aufgenommen ist. Die Klebebänder sind an den Innenseiten der Flügel angebracht.

Aus der DE-A-43 18 719 ist ein Profilteil bekannt, an dem eine Klebstoffschicht vorgesehen ist. Dieses bekannte Profilteil wird derart an einem Bauteil angebracht, daß es in dem Bereich, in dem die Klebstoffschicht vorgesehen ist, nicht bezüglich eines Bauteils verschoben wird, d. h. auf dieses aufgesteckt wird, sondern quer zur Bauteiloberfläche bewegt wird.

Aus der EP-A-0 553 018 ist ein Steckprofil mit im wesentlichen U-förmigem Querschnitt bekannt, das an seiner Innenoberfläche eine Mehrzahl von sich in Profillängsrichtung erstreckenden, von der Innenoberfläche vorspringenden Rippen aufweist.

Ein Steckprofil ist ferner aus aus der deutschen Offenlegungsschrift DE-A-31 14 157 bekannt. Wird, nachdem das Steckprofil einmal auf das Bauteil aufgeschoben worden ist, versucht, das Steckprofil wieder vom Bauteil abzuziehen, so werden aufgrund der Reibung zwischen Anlagebereich und Bauteil die Anlagebereiche der Anlagestege mit dem Bauteil verschoben und gleiten mit einer Keilförmigen Rückseite auf einer entsprechenden Keilförmigen Gegenfläche am Steckprofil ab, mit der Wirkung, daß sie in Richtung auf das Metallteil zugedrückt werden, um die Haftreibung zu erhöhen. Ferner kann der Anlagebereich der Anlagestege an seiner zur Anlage am Bauteil vorgesehenen Oberfläche aufgerauht bzw. gerieft sein, um somit den Reibungskoeffizienten der Anlagebereiche zusätzlich zu erhöhen. Bei diesem bekannten Steckprofil besteht jedoch das Problem, daß beim Anbringen des Steckprofils auf sehr glatten Bauteilen, wie z. B. lackierten Kraftfahrzeugkarosserieteilen, auch eine aufgerauhte bzw. geriefte Oberfläche der Anlagebereiche der Anlagestege beim Abziehen des Steckprofils vom Bauteil keine ausreichende Haftwirkung erzeugt, und somit das Steckprofil leicht vom Bauteil abgezogen werden kann.

Aus der deutschen Offenlegungsschrift DE-A-26 31 568 ist ein Steckprofil mit U-förmigem Querschnitt bekannt, bei welchem ein Anlagesteg einen im wesentlichen kreisförmigen, sich in Längsrichtung des Steckprofils zylindrisch erstreckenden Endabschnitt aufweist. Beim Versuch, das Steckprofil von einem Bauteil, wie z. B. einem Kraftfahrzeugkarosserieteil, abzuziehen, rollt sich der Anlagesteg um den zylindrischen Endabschnitt auf, was zu einer Zunahme der Dicke des Anlagestegs führt und somit das Steckprofil am Bauteil blockiert. Bei diesem bekannten Steckprofil besteht jedoch das Problem, daß erst ab einer bestimmten, durch das Aufrollen verursachten Zunahme der Dicke des Anlagestegs eine derart große Anpreßkraft des Anlagestegs an das Bauteil erzeugt wird, daß das Abziehen des Steckprofils vom Bauteil wesentlich erschwert ist. Bis die entsprechende Dicke erreicht ist, kann jedoch das Steckprofil im wesentlichen widerstandslos vom Bauteil abgezogen werden und somit z. B. bei entsprechend geringer Dicke des Bauteils, leicht vom Bauteil abgezogen werden.

Ferner ist z. B. aus der deutschen Offenlegungsschrift DE-A-36 41 653 ein Steckprofil bekannt, welches einen im wesentlichen U-förmigen Querschnitt aufweist und bei welchem die Haftwirkung des Steckprofils am Bauteil durch Reibungskraftschluß erzeugt wird. Dieses Profil weist an den Innenseiten der Steckprofilwände eine Mehrzahl von in Längsrichtung des Steckprofils verlaufenden Anlagestegen auf. Um zwischen den Anlagestegen und dem Bauteil eine ausreichend hohe Reibungskraft zu erreichen, ist in den Steckprofilkörper ein Armierungselement eingearbeitet, welches die beiden Steckprofilwände aufeinander zu vorspannt, um im aufgesteckten Zustand des Steckprofils die Steckprofilwände und somit die Anlagestege an das Bauteil anzupressen. Das Armierungselement besteht aus einer Metalleinlage, welche im wesentlichen U-förmig gebogen wird und dann mit dem Kunststoffmaterial des Steckprofilkörpers ummantelt wird.

Um eine Flexibilität des Steckprofils sicherzustellen, so daß das Steckprofil auch an runde Umfangsformen eines Bauteils angepaßt werden kann, ist es bei derartigen Steckprofilen bekannt, die Metalleinlage auszustanzen, so daß sich eine im wesentlichen gitterartige Metalleinlage ergibt, welche quer zur Längsrichtung flexibel ist.

Derartige Steckprofile haben jedoch aufgrund der Metalleinlage ein relativ hohes Eigengewicht, was insbesondere bei der Verwendung in Kraftfahrzeugen, wo eine Vielzahl derartiger Steckprofile verwendet wird, zu einer Erhöhung des Gesamtgewichts des Kraftfahrzeugs führt, was wiederum einen erhöhten Kraftstoffverbrauch des Kraftfahrzeugs zur Folge hat. Ferner ist die Herstellung derartiger Steckprofile energie- und kostenaufwendig, da zum einen durch das Ausstanzen und Biegen der Metalleinlage ein zusätzlicher energieaufwendiger Arbeitsvorgang erforderlich ist, bei welchem zudem ein hoher Anteil an Metallabfall entsteht, und zum anderen das bereits vorgebogene Metallband in den Extrusionsvorgang des Profilkörpers miteingebracht werden muß. Ferner sind derartige Steckprofile, da sie aus verschiedenen Materialien, wie Kunststoff für den Profilkörper, Metall und Textilfäden für die Armierung bestehen, nicht recyclebar, da eine sortenreine Trennung dieser Materialien nicht möglich ist.

Die Haftkraft dieses Steckprofils ist nur durch den Andruck durch die Metalleinlage und den Reibungskoeffizienten der Anlagestege am Bauteil bestimmt. Wenn eine z.B. durch Vibrationen, Berührung oder Spannung verursachte Krafteinwirkung auf das Steckprofil die Haftkraft überschreitet, ist bei diesem Steckprofil keine Sicherung gegen das Abziehen des Steckprofils mehr gegeben; im Gegensatz dazu wird mit zunehmenden Abziehen des Profils vom Bauteil die Anzahl der am Bauteil anliegenden Anlagestege verringert, wodurch auch die Haftkraft des Steckprofils verringert wird, so daß das Abziehen des Steckprofils zunehmend leichter wird.

Ferner sind Kunststoffprofile bekannt, die im Querschnitt wiederum im wesentlichen U-förmig sind mit zwei Profilwänden und einem die Wände verbindenden Profilsteg. An der Innenseite des Profilstegs ist eine weiche Dichtungsmasse aufgebracht, welche dann, wenn das Profil auf ein Bauteil aufgesteckt ist, an einer Stirnfläche des Bauteilsrands zur Anlage kommt und an dieser Stirnfläche anhaftet.

Derartige Steckprofile weisen jedoch den Nachteil auf, daß sie lediglich über die mit Dichtmasse teilweise bedeckte Innenseite des Profilstegs am Bauteil haften. Die Innenseiten der Wände sind bei diesen Klebe-Steckprofilen nicht mit Dichtmasse bedeckt, da eine Dichtmasse an den Innenseiten der Wände lediglich dann zur Haftung beitragen würde, wenn die Innenabmessung des Steckprofils exakt der Dicke des Bauteilrands entspricht, so daß die mit Dichtmasse bedeckten Wände direkt am Bauteil anliegen. In diesem Fall würde jedoch bereits in einer Anfangsphase des Aufsteckvorgangs des Steckprofils auf den Bauteilrand das Steckprofil mit den Endbereichen seiner Wände am Bauteilrand haften, so daß ein weiteres Aufstecken des Steckprofils erschwert bzw. nicht möglich ist. Bin nachträgliches Ausfüllen eines in der Breite größer bemessenen Steckprofils z.B. mit einer Kittmasse ist insbesondere im Fahrzeugbau aufgrund der oftmals nur schwer zugänglichen Montagepositionen und des hohen Arbeitsaufwands nicht möglich.

Da diese bekannten Steckprofile lediglich mit der mit Dichtmasse bedeckten Innenseite des Stegs am Bauteil haften, ist die Haftkraft dieser Steckprofile am Bauteil nur gering, so daß die Gefahr besteht, daß das Klebe-Steckprofil bei Krafteinwirkung, z.B. durch Vibrationen, Berührungen oder Spannungen, vom Bauteil abgezogen wird.

Die bei diesem Steckprofilen verwendete Dichtmasse besteht zumeist aus einem Butyl-Kautschuk, welcher nicht extrudierbar ist. Die Butyl-Kautschukschicht wird nach der Herstellung des Profilkörpers mit dem Profilsteg und den Seitenwänden in das im wesentlichen U-förmige Profil eingespritzt. Das Auftragen von sehr dünnen Dichtmasse-Schichten ist bei diesem Einspritzvorgang nicht möglich, so daß zum einen durch übermäßiges Auftragen der Dichtmasse erhöhte Materialkosten entstehen, zum anderen bei einer eventuellen Wiederverwertung des Steckprofils ein hoher Anteil an Fremdmaterial im Grundmaterial des Steckprofils enthalten ist und das somit gewonnene Material möglicherweise nicht wiederverwertbar ist.

Es ist die Aufgabe der vorliegenden Erfindung, ein einfach und kostengünstig herzustellendes Steckprofil vorzusehen, bei welchem eine festere und zuverlässigere Haltewirkung erzeugt werden kann. Erfindungsgemäß wird diese Aufgabe durch das im Anspruch 1 angegebene Steckprofil gelöst.

Das erfindungsgemäße Steckprofil ermöglicht somit zunächst ein leichtes Aufstecken des Steckprofils auf das Bauteil, wobei der wenigstens eine Anlagesteg in seinem Biegebereich in zur Steckrichtung des Steckprofils entgegengesetzter Richtung vom Bauteil weggedrückt wird, jedoch über die mit einem Haftkleberelement versehene Anlagefläche bereits am Anfang des Aufstekvorgangs am Bauteil leicht anhaftet. Der Biegebereich stellt sicher, daß bei vollkommen aufgestecktem Klebe-Steckprofil der Anlagesteg hauptsächlich im Biegebereich verformt ist, so daß die zur Anlage am Bauteil vorgesehene Anlagefläche im wesentlichen nicht gekrümmt wird und somit mit der gesamten Fläche und dem daran angeordneten Haftkleberelement am Bauteil anliegen kann. Bei Krafteinwirkung auf das Steckprofil, z.B. durch Vibrationen, Berührung oder Spannungen, wird der über das Haftkleberelement am Bauteil anhaftende Anlagesteg zunächst entgegen seiner Biegerichtung gezogen, wodurch ein erhöhter Andruck der Anlagefläche am Bauteil erzeugt wird, und somit die Haftwirkung des Haftkleberelements erhöht wird. Durch das erfindungsgemäße Steckprofil ist somit eine selbsttätige Haftverstärkungswirkung des Steckprofils vorgesehen, wodurch ein Abfallen oder Abziehen des Steckprofils vom Bauteil zuverlässig verhindert wird.

Da beim erfindungsgemäßen Steckprofil diese selbsttätige Haftverstärkungswirkung durch die spezielle Ausgestaltung der Anlagestege und das Vorsehen eines Haftkleberelements erreicht wird, kann auf das Vorsehen einer Metalleinlage zur Verstärkung der Anlagekraft verzichtet werden, wodurch zum einen das Eigengewicht und die Herstellungskosten des erfindungsgemäßen Steckprofils verringert werden, und zum anderen eine Recyclebarkeit des Steckprofils nach Beenden der Nutzungsdauer gewährleistet ist. Die Haftkleberschicht verhindert auch das Eindringen von Feuchtigkeit und Staub in den zwischen Steckprofil und Bauteil gebildeten Hohlraum.

Es ist kein zusätzlicher Arbeitsvorgang zum Anbringen des Anlagestegs an der Steckprofilwand erforderlich. Ferner ist dadurch, daß die Steckprofilwände, der Steckprofilsteg und die Anlagestege aus dem gleichen Material bestehen, eine optimale Wiederverwertbarkeit des erfindungsgemäßen Steckprofils sichergestellt.

Da das Haftkleberelement in einem Koextrusionsvorgang gemeinsam mit dem Steckprofil aufgebracht wird, ist wiederum kein zusätzlicher, nachgeschalteter Arbeitsgang zum Aufbringen des Haftkleberelement erforderlich, so daß auch dieser Arbeitsvorgang zeit- und kostensparend ist. Ferner kann beim Koextrusionsvorgang die Dicke des Haftkleberelements in einem großen Bereich exakt eingestellt werden, was insbesondere dann vorteilhaft ist, wenn sehr dünne Haftkleberschichten aufgebracht werden sollen. Es ist somit möglich, Haftkleberschichten mit Dicken im Bereich von 1 - 0,1 mm aufzutragen.

In dem Fall, daß das Steckprofil auf den Umfangsrand eines Bauteils, wie z.B. eines Blechteils oder mehrerer zusammengeschweißter Blechteile, aufgesteckt werden soll, wird vorgeschlagen, daß das Steckprofil im wesentlichen U-förmig ausgebildet ist und zwei Steckprofilwände und einen die Steckprofilwände verbindenden Steckprofilsteg umfaßt, wobei der wenigstens eine Anlagesteg an wenigstens einer der sich gegenüberliegenden Flächen der beiden Steckprofilwände vorgesehen ist. Somit kann das Steckprofil den Umfangsrand des Bauteils klammerartig umgreifen und deckt diesen in geeigneter Weise ab, so daß z.B. auch Schweißnähte im Randbereich des Bauelements bzw. der Bauelemente abgedeckt werden können.

Dabei ist es bevorzugt, daß an beiden sich gegenüberliegenden Flächen der Steckprofilwände jeweils wenigstens ein Anlagesteg vorgesehen ist. Somit ist an beiden Seiten des Bauteilrands jeweils wenigstens ein Anlagesteg vorgesehen, welcher dann einem Abziehen des Steckprofils vom Bauteil entgegenwirkt, so daß die Haftverstärkungswirkung noch zusätzlich verstärkt wird. Da das Steckprofil an dem Bauteil lediglich über die Anlagestege anliegt, ist außerdem eine optimale Schwingungsentkopplung des Steckprofils vom Bauteil gegeben, so daß z.B. vom Motor erzeugte Vibrationen im wesentlichen nicht auf bzw. das Steckprofil übertragen werden, und somit auch keine Vibrationsgeräusche des Steckprofils oder daran anliegender Teile erzeugt werden können.

Alternativ dazu ist es möglich, daß an einer der beiden sich gegenüberliegenden Flächen wenigstens ein Anlagesteg vorgesehen ist, und daß an der anderen Fläche wenigstens ein Haftelement vorgesehen ist. Dadurch ist es möglich, das Steckprofil schmäler zu gestalten, was insbesondere dann von Vorteil ist, wenn wenig Raum zur Verfügung steht, und wodurch das optische Erscheinungsbild zusätzlich verbessert werden kann. Ferner ist, da das Steckprofil lediglich an einer Seite über den Anlagesteg am Bauteil anliegt, ein geringeres Spiel bzw. eine exaktere Passung des Steckprofils auf dem Bauteil gegeben.

Um das Einschieben des Bauteils in das Steckprofil zu erleichtern, wird vorgeschlagen, daß der Endbereich des wenigstens einen Anlagestegs in einer Ausgangsstellung vor Anbringung am Bauteil vom Biegebereich ausgehend entgegen der Steckrichtung und zur jeweils gegenüberliegenden Steckprofilwand hin geneigt verläuft, so daß der Endbereich bereits teilweise in die Bewegungsrichtung des Bauteils relativ zum Steckprofil beim Aufsteckvorgang zeigt und in den Bewegungsweg des Bauteils ragt. Das Steckprofil wird somit beim Aufsteckken bereits auf dem Bauteil selbst zentriert, wobei jedoch vom Anfang des Aufsteckvorgangs an Kontakt zwischen dem Haftkleberelement an der Anlagefläche und dem Bauteil besteht. Ferner ist durch diese Anordnung des wenigstens einen Anlagestegs bereits beim Einschieben des Bauteils in das Steckprofil eine bestimmte Vorspannung des Endbereichs des wenigstens einen Anlagestegs in Richtung auf die Oberfläche des Bauteils gegeben, so daß bereits von Anfang an die Haftwirkung des Haftkleberelements am Bauteil wirksam werden kann.

Wenn an den freien Enden der Steckprofilwände jeweils nach innen in Richtung auf den Steckprofilsteg zugeneigte Einweisflächen vorgesehen sind, kann das erfindungsgemäße Steckprofil in besonders einfacher Weise auf das Bauteil aufgesteckt werden, ohne darauf achten zu müssen, daß das Bauteil exakt in die Öffnung des U-förmigen Steckprofils eingeführt wird.

Insbesondere, wenn das Steckprofil zur Abdeckung des Randabschnitts eines Metall- bzw. Blechteils verwendet wird, ist es vorteilhaft, wenn an der Innenseite des Steckprofilstegs eine sich in Längsrichtung des Steckprofils erstreckende Vertiefung vorgesehen ist, in welcher ein Haftkleberelement angeordnet ist. Die Stirnfläche des Blechteils liegt bei vollkommen aufgestecktem Steckprofil innerhalb der Vertiefung und ist vom Haftkleberelement umgeben, so daß bei nicht korrosionsgeschützter (z.B. nicht lackierter) Stirnfläche des Blechteils diese durch das die Stirnfläche im wesentlichen abdichtende Haftkleberelement gegen Korrosion geschützt ist. Das Vorsehen der Vertiefung verhindert, daß das Haftkleberelement nach dem Einschieben den Blechteilrand umgreift und nicht zur Seite weggedrückt wird.

In besonders einfacher und materialsparender Weise kann die Vertiefung dadurch vorgesehen werden, daß sie zwischen zwei in Längsrichtung des Steckprofils verlaufenden Rippen gebildet ist.

Wird das Steckprofil z.B. auf eine fest am Kraftfahrzeug zu montierende Fensterscheibe aufgesteckt, ist es vorteilhaft, wenn an der Innenseite des Steckprofilstegs und/oder einer der beiden Steckprofilseitenwände wenigstens eine Anlagerippe zur Anlage am Bauteil vorgesehen ist, welche sich in Längsrichtung des Steckprofils erstreckt. Somit ist sichergestellt, daß das Bauteil über eine Mehrzahl an Auflagepunkten definiert am Steckprofil anliegt, und somit eine seitliche Bewegung des Steckprofils auf dem Bauteil vermieden wird.

In einer weiteren bevorzugten Ausführungsform umfaßt das Steckprofil lediglich eine Steckprofilwand. Diese Ausführungsform ist insbesondere dann vorteilhaft, wenn das Steckprofil in eine Nut eingeschoben werden soll. Derartige Nuten können z.B. in Kunststoffleisten, bzw. Zierleisten, welche am Kraftfahrzeug anzubringen sind, vorgesehen sein.

In diesem Fall ist es wiederum vorteilhaft, wenn an beiden Seitenflächen der Steckprofilwand jeweils wenigstens ein Anlagesteg angeordnet ist. Es ist somit wieder bei maximaler Haftverstärkungswirkung eine Schwingungsentkopplung des Steckprofils vom Bauteil gegeben, so daß die Übertragung von Schwingungen zwischen den beiden Teilen weitgehend vermieden werden kann.

Alternativ dazu ist es möglich, nur an einer Seitenfläche der Steckprofilwand wenigstens einen Anlagesteg vorzusehen, und an der anderen Seitenfläche ein Haftelement anzuordnen. Es ist somit möglich, ein Steckprofil vorzusehen, daß in besonders schmale Nuten eingeführt werden kann, wobei dann wiederum nur ein geringes seitliches Spiel des Steckprofils gegeben ist.

Um bei der Montage des Steckprofils zu verhindern, daß durch zu starkes Ziehen in Längsrichtung des Steckprofils sich der Querschnitt und somit möglicherweise die Hafteigenschaft des Steckprofils verändert, wird vorgeschlagen, daß in wenigstens einer Steckprofilwand und/oder einem die Steckprofilwände verbindenden Steckprofilsteg ein in Längsrichtung des Steckprofils verlaufender Längenstabilisator angeordnet ist. Wird der Längenstabilisator in einer der Steckprofilwände angebracht, können durch geeignete Auswahl des Einbauorts des Längenstabilisators in der Steckprofilwand, d.h. näher beim Steckprofilsteg oder am freien Ende der jeweiligen Steckprofilwand die Bereiche des Steckprofils festgelegt, in welchen bei einer Krümmung des Steckprofils eine Stauchung bzw. eine Dehnung auftritt. Es ist somit möglich, das Steckprofil jeweils exakt und in optimaler Weise den räumlichen Verlauf des Bauteilrands anzupassen.

Vorzugsweise umfaßt der Längenstabilisator einen Faserstrang. Ein derartiger Faserstrang weist insbesondere in Längsrichtung des Faserstrangs eine minimale Längenveränderung bei Krafteinwirkung auf, ist jedoch quer zur Längsrichtung im wesentlichen kraftfrei verformbar.

Um bei ausreichender Längenstabilisation die Recyclebarkeit des Steckprofils zu gewährleisten, ist es vorteilhaft, wenn der Volumenanteil des Längenstabilisators am Steckprofil weniger als 1 % beträgt, vorzugsweise weniger als 0,5%.

Das Haftkleberelement umfaßt bevorzugterweise einen Haftschmelzkleber. Derartige Haftschmelzkleber sind lösungsmittelfrei und sind dadurch nach Beendigung der Nutzungsdauer des Steckprofils recyclebar.

Um bei der Wiederverwertung des Steckprofils den Anteil an Fremdmaterialien im Grundmaterial des Steckprofils so gering wie möglich zu halten wird vorgeschlagen, daß der Gewichtsanteil des Haftkleberelements am Steckprofil weniger als 4 % beträgt, vorzugsweise weniger als 3 %.

Die Herstellungskosten für das erfindungsgemäße Steckprofil können zusätzlich dadurch verringert werden, daß auch der Faserstrang mit in das Steckprofil einextrudiert ist, wobei vor dem Extrudiervorgang der Faserstrang mit einer Haftschicht (Schlichte) ummantelt wird, um ein optimales Anformen des Steckprofils an den Faserstrang zu erhalten.

Der Biegebereich im Anlagesteg ist in besonders einfacher Weise dadurch herzustellen, daß der Biegebereich einen Zwischenabschnitt des Anlagestegs mit verringerter Dicke umfaßt und somit ein filmscharnierartiges Bauteil bildet. Somit ist sichergestellt, daß selbst bei Verwendung weitgehend inelastischer Kunststoffe zur Herstellung des Steckprofils der Anlagesteg aufgrund der geringen Dicke des Biegebereichs im Biegebereich verformt werden kann, so daß ein geeignetes Anliegen der Anlagefläche am Bauteil erreicht werden kann. Ferner wird dadurch die Gefahr beseitigt, daß insbesondere bei der Verwendung starrer Kunststoffe der Anlagesteg beim Aufstecken auf das Bauteil abbricht.

Um das erfindungsgemäße Steckprofil in einfacher Weise an verschiedene Anwendungsbereiche anpassen zu können, z.B. an verschiedene Dicken von Bauteilen, welche in einem relativ großen Bereich variieren, wird vorgeschlagen, daß das im wesentlichen U-förmige Steckprofil zweiteilig ist, aus einem im wesentlichen U-förmigen Trägerteil mit zwei Seitenstegen und einem die Seitenstege verbindenden Verbindungssteg, sowie einem in das U-förmige Trägerteil einsetzbaren U-förmigen Einsatzteil, wobei das U-förmige Einsatzteil die beiden Steckprofilwände mit dem wenigstens einen Anlagesteg sowie den Steckprofilsteg umfaßt. Es wird somit möglich, in ein Trägerteil verschiedene Einsatzteile einzusetzen, welche dann jeweils der speziellen Anforderung angepaßt sind.

Zusätzlich kann an das Trägerteil ein Formteil angeformt sein. Das Formteil kann zum Beispiel eine Zierleiste oder Abdeckleiste sein, welche im Fahrzeug sichtbar ist, und welche ein sich über die Länge des Steckprofils veränderndes Profil aufweist. Es ist somit auch möglich, unter Verwendung eines Einsatzteils, verschiedene Trägerteile mit verschiedenen angeformten Formteilen zu verwenden, wodurch der Anwendungsbereich des Steckprofils erweitert wird.

Dabei ist es vorteilhaft, wenn das Formteil durch Spritzguß an das Trägerteil angeformt ist. Beim Spritzgußvorgang kann das Formteil mit dem Trägerteil eine stoffbündige Verbindung eingehen, so daß ohne die Verwendung zusätzlicher Klebstoffe das Formteil fest am Trägerteil anhaftet, wobei jedoch nach wie vor eine Wiederverwertbarkeit des Trägerteils mit dem Formteil erhalten bleibt. Bei diesem Vorgang wird das Trägerteil in eine Spritzgußform eingelegt, welche darauf folgend unter Druck mit dem zur Herstellung des Formteils vorgesehenen Kunststoff ausgespritzt wird, wobei durch den auf den Kunststoff ausgeübten Druck und die beim Verfahren erforderliche Wärme die stoffbündige Verbindung zwischen Formteil und Trägerteil erreicht wird. Da das Einsatzteil mit den Haftkleberelementen beim Spritzgußvorgang vom Trägerteil enfernt ist, ist eine Beschädigung der Haftkleberelemente durch die Wärme des Spritzgußvorgangs ausgeschlossen.

Um in einfacher Weise eine Fixierung des Einsatzteils im Trägerteil zu erreichen, wird vorgeschlagen, daß das Formteil die freien Enden der Trägerteilseitenstege umgreift und Rastansätze für das Einsatzteil bildet. Somit kann das Einsatzteil in einfacher Weise in das Trägerteil eingesteckt werden und ist gleichzeitig durch die Rastansätze am Trägerteil gesichert.

Um das erfindungsgemäße Steckprofil auch zur Anbringung weiterer Bauteile verwenden zu können, wird vorgeschlagen, daß an das Steckprofil wenigstens ein anderer Steckprofilabschnitt zur Aufnahme eines weiteren Bauteils angeformt ist. Das weitere Bauteil kann z.B. auch ein Dichtungsprofil umfassen, welches z.B. eine in einer Automobiltüre angeordnete, bewegbare Fensterscheibe abdichtet.

Ferner ist es möglich an das Steckprofil direkt ein Dichtungsprofil anzuformen, so daß das erfindungsgemäße Steckprofil direkt als Dichtungsprofil verwendet werden kann, welches z.B. zum Abdichten einer Automobiltüre oder eines Automobilkofferraumdeckels verwendet werden kann.

Die vorliegende Erfindung wird im folgenden anhand in den Figuren dargestellter, bevorzugter Ausführungsformen erläutert.

Es zeigt:
- Figur 1: einen Querschnitt durch ein erfindungsgemäßes Klebe-Steckprofil, das auf ein Bauteil aufgesteckt ist;
- Figur 1a: einen Querschnitt durch eine zweite Ausführungsform des erfindungsgemäßen Klebe-Steckprofils, welches in eine in einem Bauteil vorgesehene Nut eingesteckt ist;
- Figur 2: einen Querschnitt durch eine dritte Ausführungsform des erfindungsgemäßen Klebe-Steckprofils, welches eine Mehrzahl von Profilabschnitten zur Aufnahme verschiedener Bauteile aufweist;
- Figur 3: einen Querschnitt durch eine vierte Ausführungsform des erfindungsgemäßen Klebe-Steckprofils, welches zweiteilig ausgebildet ist, und an welches ein Formteil angeformt ist;
- Figur 4: eine perspektivische Schnittansicht des erfindungsgemäßen Klebe-Steckprofils aus Fig. 3 und
- Figur 5a und Figur 5b: jeweils das Trägerteil mit dem angeformten Formteil und das Einsatzteil des in den Fig. 3 und 4 dargestellten Klebe-Steckprofils.

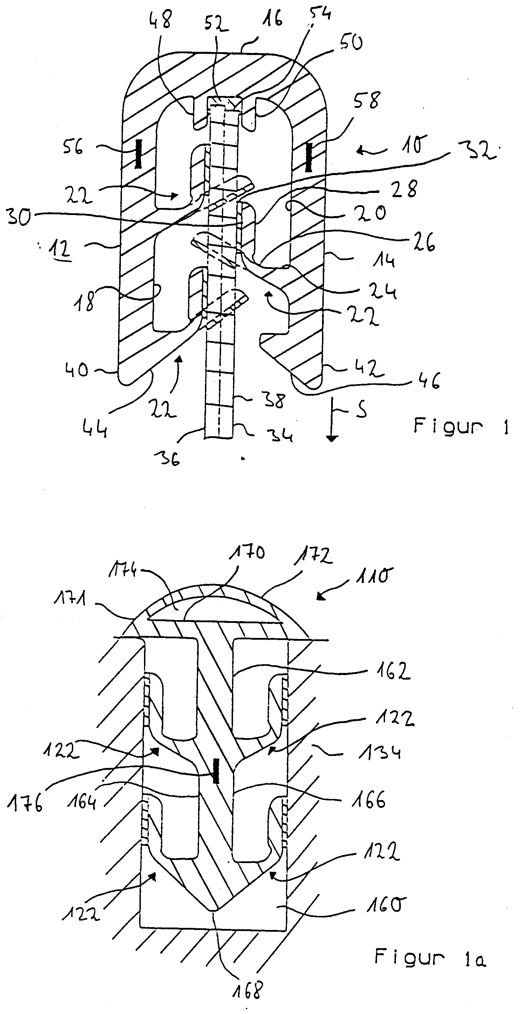

In Fig. 1 ist ein erfindungsgemäßes Klebe-Steckprofil allgemein mit 10 bezeichnet. Das Klebe-Steckprofil 10 weist einen im wesentlichen U-förmigen Querschnitt auf, mit zwei Steckprofilwänden 12, 14 sowie einem Steckprofilsteg 16. An deneinander zugewandten Innenseiten 18, 20 der Steckprofilwände 12, 14 sind jeweils Anlagestege 22 angeformt. Die Anlagestege 22 weisen einen direkt in die Steckprofilwände 12, 14 übergehenden Sockelbereich 24, einen sich an den Sockelbereich 24 anschließenden Biegebereich 26 und einen sich an den Biegebereich 26 anschließenden Endbereich 28 auf. An den Endbereichen 28 ist eine Anlagefläche 30 vorgesehen, welche mit einem Haftkleberelement, wie z.B. einer Haftschmelzkleberschicht 32, beschichtet ist.

In Fig. 1 ist das Klebe-Steckprofil 10 in einem auf ein Bauteil 34 aufgesteckten Zustand dargestellt. Das Bauteil 34 kann z.B. die aneinander geschweißten Randbereiche zweier Blechteile 36 und 38 umfassen. Im aufgesteckten Zustand des Klebe-Steckprofils 10 liegen die Anlagestege 22 über die Anlageflächen 30 bzw. die Haftschmelzkleberschichten 32 jeweils an den entsprechenden Seiten des Bauteils 34 an.

Beim Aufstecken des Klebe-Steckprofils auf das Bauteil 34 werden die Endbereiche 28 der Anlagestege 22 in einer Richtung entgegengesetzt der Aufsteckrichtung S des Klebe-Steckprofils verbogen. Dabei wird lediglich der Biegebereich 26 der Anlagestege 22 verformt, so daß die Anlageflache 30 der Anlagestege 22 im wesentlichen unverformt und eben bleibt und somit über die gesamte Anlageflähe 30 am Bauteil 34 anliegt. Der Biegebereich 26 umfaßt einen Bereich der Anlagestege 22 mit geringerer Dicke, so daß insbesondere auch bei der Verwendung eines starren Kunststoffs zur Herstellung des Klebe-Steckprofils 10 die Anlagestege 22 nur im Bereich der Biegebereiche 26 verformt werden, ohne dabei zu brechen.

Wie in Fig. 1 mit strichlierten Linien dargesellt, sind die Endbereiche 28 der Anlagestege 22 im nicht aufgesteckten Zustand des Klebe-Steckprofils derart angeordnet, daß sich bereits entgegengesetzt der Aufsteckrichtung S und auf die jeweils entgegengesetzte Steckprofilwand 12 bzw. 14 zu erstrecken. Somit ist ein leichtes, selbstzentrierendes Einführen des Bauteils 34 in das Klebe-Steckprofil möglich, wobei bereits beim anfänglichen Einführen über die Haftschmelzkleberschichten 32 ein Haftkontakt zwischen den Anlagestegen 22 und dem Bauteil 34 besteht.

Wird nun das Klebe-Steckprofil 10 entgegen der Steckrichtung S vom Bauteil 34 abgezogen, so wird der am Bauteil 34 anhaftende Endbereich zunächst geringfügig mit dem Bauteil 34 relativ zum Klebe-Steckprofil 10 mitbewegt. Bei dieser Bewegung wird jedoch der Abstand zwischen dem Endbereich 28 des Anlagestegs 22 und dem Sockelbereich 24 verkürzt, wodurch eine Stauchung insbesondere des Biegebereichs 26 und des Sockelbereichs 24 auftritt. Diese Stauchung führt wiederum zu einer Erhöhung der Anlagekraft des Endbereichs 28 am Bauteil 34, so daß auch die Haftwirkung der Haftschmelzkleberschicht 32 verstärkt wird. Diese selbsttätige Haftverstärkungswirkung wird mit zunehmendem Abziehen des Klebe-Steckprofils 10 vom Bauteil 34 verstärkt, so daß ein unerwünschtes Abfallen oder Abziehen des Klebe-Steckprofils vom Bauteil 34 praktisch unmöglich ist.

Ferner ist es möglich, die Haftkraft der einzelnen Anlageflächen durch eine geeignete Auswahl der Breite der Haftflächen bzw. der Haftschmelzkleberschichten zu variieren und somit an verschiedene Anwendungserfordernisse anzupassen. Auch kann die Zusammensetzung des Haftschmelzklebers derart eingestellt werden, daß sie für den Kunststoff, aus dem das Klebe-Steckprofil hergestellt ist, geeignet ist und mit diesem eine geeignete Haftverbindung, bzw. Adhäsion, eingeht. Ferner ist es möglich, den Haftschmelzkleber auf das jeweilige Bauelement abzustimmen. Insbesondere zur Verwendung im Automobilbau muß der Haftschmelzkleber derart ausgewählt werden, daß er seine Hafteigenschaft in einem großen Temperaturbereich beibehält. Diese Temperaturbereich geht von ca. - 30° C bis ca. + 80° C, und die Zusammensetzung des Haftschmelzklebers muß derart sein, daß bei sehr niederen Temperaturen seine Adhäsionseigenschaft, d.h. das Anhaften am Anlagesteg bzw. dem Bauteil, und bei hohen Temperaturen seine Kohäsionseigenschaft, d.h. der Zusammenhalt der Kleberschicht in sich, nicht verlorengehen.

Um das Klebe-Steckprofil einfach auf das Bauteil 34 austecken zu können, sind in den Endbereichen 40 und 42 der Steckprofilwände 12 und 14 jeweils nach innen und auf den Steckprofilsteg 16 zu geneigte Einweisflächen 44, 46 vorgesehen, welche sicherstellen, daß das Bauteil 34 in einer geeigneten Stellung in das Steckprofil 10 eingeführt wird. Ferner sind an der Innenseite des Steckprofilstegs 16 zwei seitlich voneinander beabstandete und in Längsrichtung des Klebe-Steckprofils 10 verlaufende Rippen 48, 50 vorgesehen, zwischen welchen eine Haftkleberschicht 52 eingeschlossen ist. Im aufgestecktem Zustand des Klebe-Steckprofils 10 kommt eine Stirnfläche 54 des Bauteils 38 zwischen den Rippen 48 und 50 zu liegen, und ist in die Haftschmelzkleberschicht 52 eingeschoben. Somit ist zusätzlich zur Dichtungswirkung der einzelnen Anlagestege 22 durch die Rippen 48 und 50 und die Haftschmelzkleberschicht 52 ein Dichtungselement vorgesehen, welches auch dazu dient, die möglicherweise unlackierte Stirnseite des Bauteils 34, welches, wie erwähnt, ein Blechteil sein kann, umhüllt und dieses somit gegen Korrosion schützt.

Ferner sind in die Seitenwänden 12, 14 des Klebe-Steckprofils 10 jeweils Faserstränge 56, 58 eingebettet. Die Faserstränge 56, 58 werden bereits beim Extrusionsvorgang in das Klebe-Steckprofil einextrudiert, und werden, um ein optimales Anhaften des Kunststoffmaterials an den Fasersträngen zu gewährleisten, vor dem Einextrudieren mit einer Haftschicht (Schlichte) ummantelt. Die Faserstränge 56, 58 haben die Aufgabe, das Klebe-Steckprofil gegen Dehnbewegungen in Längsrichtung zu sichern. Derartige Dehnbewegungen könnten möglicherweise dazu führen, daß sich die Querschnittsabmessungen des Klebe-Steckprofils 10 verändern, und somit ein Anhaften des Klebe-Steckprofils 10 am Bauteil 34 nicht mehr unter allen Umständen gewährleistet ist.

Ferner sind durch die Faserstränge 56, 58 jeweils die Bereiche des Klebe-Steckprofils 10 festgelegt, welche bei einer Krümmung des Klebe-Steckprofils 10 um einen gekrümmten Außenumfang des Bauteils 34 gedehnt bzw. gestaucht werden. Je nach Anordnung der Faserstränge 56, 58 in den Steckprofilwänden 12, 14, d.h. näher bei den Endbereichen 40, 42 oder näher beim Steckprofilsteg 16, es ist somit möglich, die Dehn- bzw. Stauchbereiche zu verändern, und somit die Biegeeigenschaften des Klebe-Steckprofils 10 in geeigneter Weise an jeweilige Erfordernisse anzupassen.

Ferner kann die Querschnittsform der Fasertränge an verschiedene Anforderungen angepaßt werden; sie kann z.B. rund sein oder ein Reckteck mit Seitenlängen im Bereich von z.B. 0,2 x 15 mm. Derartige Faserstränge mit relativ großen Breiten und relativ kleinen Dicken definieren den Bereich des Klebe-Steckprofils, in welchem weder eine Stauchung noch eine Dehnung auftreten soll, so daß die gesamte Steifigkeit des Klebe-Steckprofils erhöht wird.

Die Faserstränge 56, 58 bestehen vorzugsweise aus Kunststoffasern, welche nach Beendigung der Nutzungsdauer des Klebe-Steckprofils zusammen mit den Klebe-Steckprofil wiederverwertet werden können. Selbst wenn für die Faserstränge Fremdmaterialien verwendet werden, d.h. andersartige Materialien als für die Steckprofilwände und den Steckprofilsteg, ist es möglich, das Klebe-Steckprofil als Ganzes wieder aufzubereiten, da der geringe Faserstranganteil bei einer Wiederaufbereitung des Materials in einzelne Faserstücke von ca. 0,4 mm Länge und ca. 15 - 20 µm Stärke zerbrochen wird. In dieser Form wirken die Faserstücke wegen ihrer außerordentlich kleinen Dimension als Verstärkungselemente im Kunststoff. Wegen des äußerst geringen Volumenanteils der so entstandenen Faserstücke von weniger als 1 % relativ zum Kunststoff bleibt jedoch die Stoffeigenschaften des Kunststoffs im wesentlichen unverändert.

Das lösungsmittelfreie Polymer, aus dem die Haftschmelzkleberschicht besteht, wird mit dem Polymer, aus dem das Klebe-Steckprofil hergestellt ist, bei einer thermoplastischen Wiederaufbereitung voll dispergiert, ohne daß die physikalischen und chemischen Eigenschaften des somit erzeugten Materials wesentlich beeinflußt werden. Der geringe Anteil des Haftschmelzklebermaterials im Kunststoffmaterial des Klebe-Steckprofils, welcher weniger als 4 % beträgt, sowie die speziell ausgesuchte Verträglichkeit der beiden Polymere miteinander führen bei einer Wiederverwertung des Klebe-Steckprofils zu einem neuen Ausgangsmaterial, welches im wesentlichen keine Veränderungen der durch die speziellen Anforderungen geforderten Werte der Stoffeigenschaften aufweist.

Die durch abermalige thermoplastische Aufbereitung durch Extrusions- oder Spritzgußververfahren bedingte Formveränderung des Faserstrangs, die vollständige Dispergierung der Haftschmelzkleberschicht, sowie die geringen Mengen der beiden Steckprofilausrüstungen (Fremdmaterialien) im Verhältnis zum ursprünglichen Basiswerkstoff, sind Voraussetzungen zum Wiederverwerten aller eingesetzten Werkstoffe als Basismaterial für die Herstellung neuer Klebe-Steckprofile.

Im nachfolgenden werden verschiedene weitere Ausführungsformen des erfindungsgemäßen Klebe-Steckprofils beschrieben, wobei einander entsprechende Teile in verschiedenen Ausführungsformen mit den gleichen Bezugszeichen, jeweils erhöht um die Zahl 100 bezeichnet sind.

In Fig. 1a ist ein Klebe-Steckprofil 110 dargestellt, das in eine in einem Bauteil 134 vorgesehene Nut 160 eingesteckt werden kann. Bei dieser Ausführungsform umfaßt das Klebe-Steckprofil 110 lediglich eine Steckprofilwand 162, an deren beiden Seiten 164 und 166 jeweils wiederum eine Mehrzahl von Anlagestegen 122 angeordnet ist. Die einzelnen Anlagestege 122 an den jeweiligen Seiten 164 und 166 erstrecken sich jeweils in entgegengesetzten Richtungen von der Steckprofilwand 162 und vom freien Ende 168 der Steckprofilwand 162 weg.

Der Aufbauf der Anlagestege 122 entspricht im wesentlichen dem Aufbau der in Fig. 1a dargestellten Anlagestege 22, und auch die selbsttätige Haftverstärkungswirkung, die auftritt, wenn das Klebe-Steckprofil 110 aus der Nut 160 gezogen wird, entspricht der mit Bezug auf die in Fig. 1 beschriebenen Wirkung, so daß eine Beschreibung derselben hier weggelassen werden kann.

An dem dem freien Ende 168 entgegengesetzten Ende des Klebe-Steckprofils 110 ist in dieser Ausführungsform ein Dichtungs- oder Dämpfungsprofil 171 angeformt, welches aus einem Grundelement 170 und einem an das Grundelement 170 angeformten Anlageelement 172 besteht. Zwischen Grundlement 170 und Anlageelement 172 ist ein Hohlraum 174 eingeschlossen. Dieses in Fig. 1a dargestellte Klebe-Steckprofil eignet sich daher besonders zur Verwendung als Dichtungsprofil, z.B. bei Kraftfahrzeugtüren oder dem Kofferraumdeckel, wobei dann jeweils die Tür oder der Kofferraumdeckel zur Anlage am Anlageelement 172 kommt und durch die Verformung des Anlageelements 172 bzw. des Hohlraums 174 die Dichtungseigenschaft des Klebe-Steckprofils gewährleistet ist.

In die Steckprofilwand 162 ist wiederum ein Faserstrang 176 einextrudiert, welcher wiederum die gleiche, wie mit Bezug auf die Ausführungsform der Fig. 1 beschriebene Längenstabilisatorfunktion hat, und welcher wiederum die Dehn bzw. Stauchbereiche des Klebe-Steckprofils 110 festlegt.

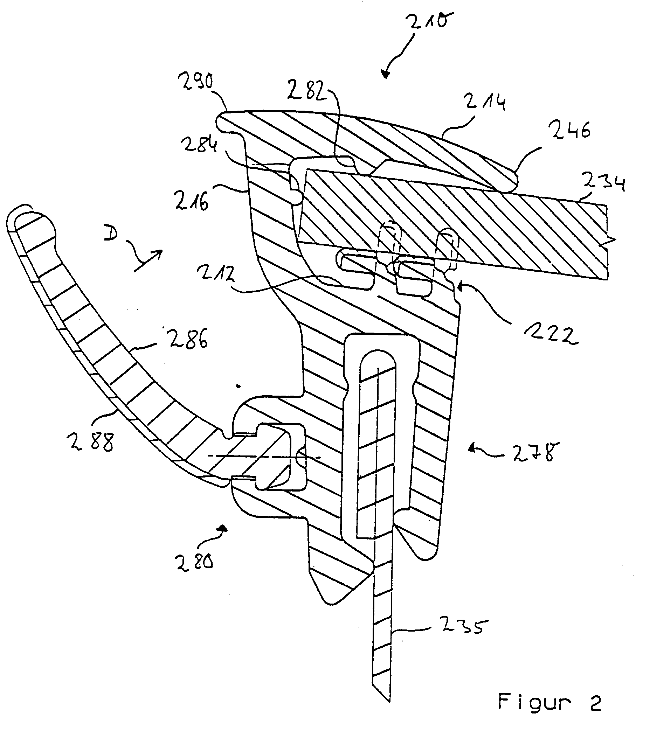

In Fig. 2 ist ein Klebe-Steckprofil 210 dargestellt, an welches eine Mehrzahl weiterer Steckprofilelemente 278 bzw. 280 angeformt ist. In dieser Ausführungsform sind lediglich an einer Seitenwand 212 die Anlagestege 222 angeformt, und an der anderen Seitenwand 214 sowie an den Steckprofilsteg 216 sind jeweils an deren Innenseiten Anlagerippen 282, 284 angeordnet. Das Bauteil 234, welches z.B. eine im Kraftfahrzeug fest montierte Fensterscheibe oder eine Türverkleidung sein kann, liegt somit an den Anlagestegen 222, an den Anlagerippen 282, 284 sowie am Endbereich 246 der Steckprofilwand 214 an. Auch in dieser Ausführungsform ist wiederum die selbsttätige Haftverstärkungswirkung der Anlagestege 122 gegeben, wobei durch die Mehrzahl zusätzlicher definierter Anlagepunkte Bauteile 234 unterschiedlicher Stärke jeweils fest innerhalb des Klebe-Steckprofils gehalten werden können.

In die in dieser Ausführungsform zusätzlich vorgesehenen Steckprofilabschnitte 278 und 280 können jeweils zusätzliche Bauteile eingeschoben werden; so ist z.B. in den Steckprofilabschnitt 280 eine Dichtungslippe 286 mit einem Gleitelement 288 eingesteckt, welche insbesondere zur Anlage an einer in einer Automobiltür bewegbaren Fensterscheibe geeignet ist. Die Dichtungslippe 286 kann durch den Druck der Fensterscheibe in Richtung eines Pfeils D gedrückt werden, und sich an ein vom Steckprofilsteg 216 und an einem Fortsatz 290 der Steckprofilwand 214 gebildetes Außenprofil anlegen. Das über den Steckprofilabschnitt 278 aufgenommene Bauteil 235 kann z.B. ein in einer Automobiltür vorgesehenes Montageblech zur Aufnahme des Steckprofilabschnitts 278 sein. Das in Fig. 2 beschriebene Klebe-Steckprofil 210 mit den Steckprofilabschnitten 278 und 280 eignet sich somit insbesondere zur Anordnung am Fensterscheibenaustrittschlitz in einer Kraftfahrzeugtür.

Zusätzlich zu den in den Fig. 1a und 2 dargestellten angeformten Steckprofil- bzw. Dichtungsabschnitten können weitere verschiedene Formteilabschnitte an das erfindungsgemäße Klebe-Steckprofil angeformt werden, welche an die jeweils an das Klebe-Steckprofil gestellten Anforderungen angepaßt sind. Ferner können auch die zusätzlich angeformten Steckprofilabschnitte, wie z.B. der Steckprofilabschnitte 278 und 280, Fig. 2, Anlagestege mit den jeweiligen Haftschmelzkleberschichten auf den entsprechenden Anlageflächen aufweisen.

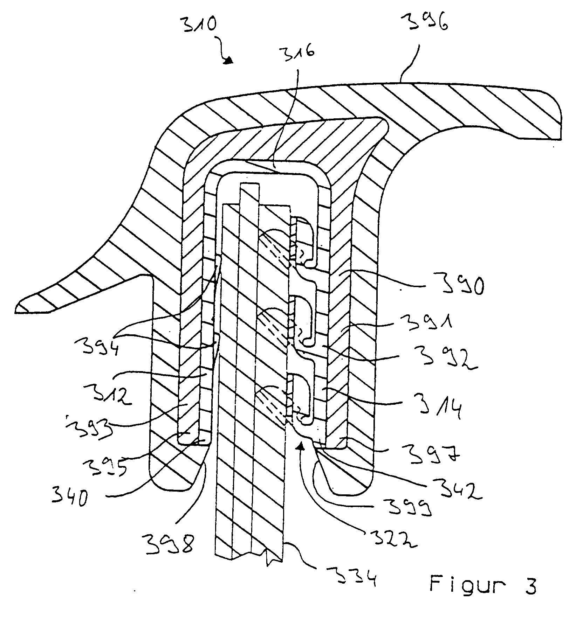

In den Fig. 3 bis 5 ist eine weitere Ausführungsform des erfindungsgemäßen Klebe-Steckprofils 310 dargestellt. Das Klebe-Steckprofil 310 ist im wesentlichen zweiteilig aufgebaut und umfaßt ein Trägerteil 390, welches, einen im wesentlichen U-förmigen Querschnitt aufweist. In das Trägerteil ist ein Einsatzteil 392 eingesetzt, welches ebenfalls einen im wesentlichen dem U-förmigen Querschnitt aufweist. Das Einsatzteil 392 entspricht im wesentlichen dem in Fig. 1 dargestellten Klebe-Steckprofil, wobei jedoch nur an einer der Steckprofilwände 314 die Anlagestege bei 322 angeordnet sind. An der anderen Steckprofilwand 312 sind direkt Haftschmelz-kleberschichten 394 aufgebracht.

Wird das Klebe-Steckprofil 310 auf das Bauteil 334 aufgesteckt, so wird das Bauteil 334 durch die Vorspannung der Anlagestege 322 gegen die an der Steckprofilwand 312 vorgesehenen Haftschmelzklebeschichten gedrückt. Wird nun wiederum versucht, das Klebe-Steckprofil vom Bauteil 334 abzuziehen, wird durch die selbsttätig verstärkende Haftwirkung (welche mit Bezug auf die vorhergehende Ausführungsform beschrieben worden ist) das Bauteil 234 zunehmend stärker gegen die Wand 312 und somit die Haftschmelzkleberschichten 394 gedrückt, so daß in dieser Ausführungsform im wesentlichen die gleiche Haftkraft bzw. selbsttätige Haftverstärkungswirkung wie bei den vorhergehenden Ausführungsformen gegeben ist. Die Ausführungsform weist jedoch den Vorteil auf, daß die Gesamtbaubreite des Einsatzteils 392 geringer sein kann, da lediglich an einer der Steckprofilwände die Anlageansätze 322 vorgesehen sind. Das für das Bauteil 334 im Klebe-Steckprofil 310 auftretende seitliche Spiel ist somit deutlich verringert.

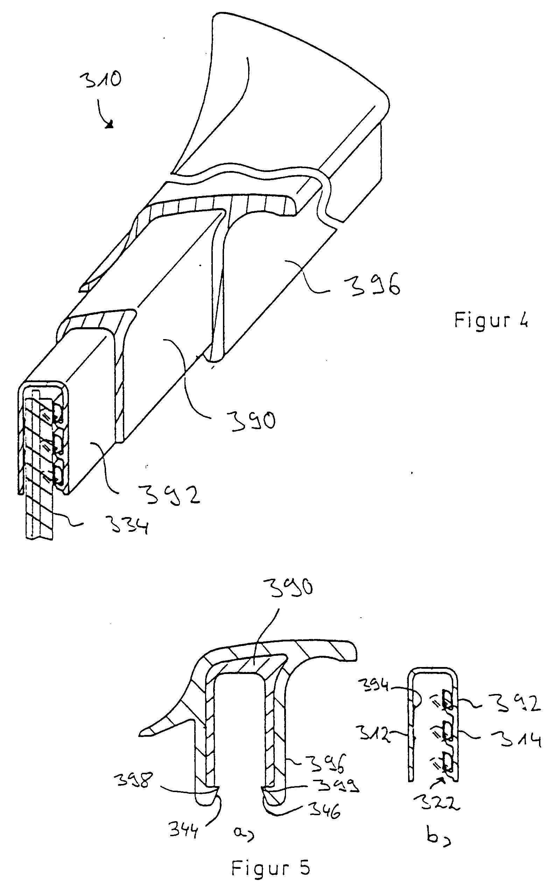

Ferner ist in der in den Fig. 3 bis 5 dargestellten Ausführungsform an das Trägerteil 390 ein Formteil 396 angeformt. Das Formteil 396 kann z.B. eine Zierblende, eine Abdeckung oder dgl. sein, welche im Kraftfahrzeug sichtbar ist, und welche an die Oberflächenform bzw. die Außenform und/oder die Farbe eines weiteren Bauteils angepaßt sein kann. Wie insbesondere in Fig. 4 zu erkennen ist, kann sich die Querschnittsform des an das Trägerteil 390 angeformten Formteils 396 über die Längserstreckung des Klebe-Steckprofils verändern.

Das Formteil 396 kann z.B. in einem Spritzgußverfahren an das Trägerteil 390 angeformt werden, wobei zunächst das Trägerteil 390 in eine Spritzgußform eingelegt wird, welche darauffolgend mit heißem, flüssigem oder zähflüssigem Kunststoff ausgegossen wird, welcher das Formteil 396 bildet und bei diesem Vorgang eine stoffbündige Verbindung mit dem Trägerteil 390 eingeht. Dabei kann die Form des Formteils 396 derart sein, daß es, wie insbesondere in den Fig. 3 und 5 dargestellt, die freien Enden 395 bzw. 397 der Trägerteilseitenstege 393 bzw. 391 umgreift, und Rastansätze 398 und 399 mit Einweisflächen 344,346 für das Einsatzteil 392 bildet. Das Einsatzteil 392 kann somit einfach in das U-förmige Trägerteil 390 eingeschoben werden, bis es vollkommen in dem Trägerteil 390 aufgenommen ist, und die Rastansätze 398 und 399 hinter den Endabschnitten 340 und 342 der Einsatzteilwände 312 und 314 einrasten, wodurch das Einsatzteil 392 fest in dem Trägerteil 390 gehalten ist.

Die zweiteilige Ausgestaltung des Klebe-Steckprofils 310 in dieser Ausführungsform ist insbesondere daher vorteilhaft, da beim Spritzgußverfahren relativ hohe Temperaturen auftreten, durch welche der bereits vorher im Extrusionsverfahren am Einsatzteil bzw. Klebe-Steckprofil angebrachte Haftschmelzkleber möglicherweise beschädigt werden könnte. Ferner kann mit der zweiteiligen Ausgestaltung des Klebe-Steckprofils dieses problemlos an verschiedene Dicken der zur Anbringung vorgesehenen Bauteile angepaßt werden, bzw. es können problemlos verschiedene Trägerteile mit Formteilen verschiedener Form auf das gleiche Einsatzteil aufgesetzt werden.

Durch das erfindugsgemäße Klebe-Steckprofil ist ein Klebe-Steckprofil vorgesehen, welches, wenn es einmal auf ein Bauteil aufgesteckt ist, durch die spezielle Ausgestaltung der Anlagestege und das Vorsehen von Haftkleberelementen auf den Anlageflächen der Anlagestege eine selbsttätige Haftverstärkungswirkung aufweist. D.h., wird versucht, das Klebe-Steckprofil vom Bauteil abzuziehen, so führt die Verformung der am Bauteil anhaftenden Anlagestege dazu, daß die Anpresskraft der Anlagestege an das Bauteil erhöht wird, wodurch auch die Haftkraft erhöht wird und somit das Abziehen des Klebe-Steckprofils zunehmend erschwert wird. Ein Abziehen des Klebe-Steckprofils kann erst erreicht werden, wenn durch eine zu stark ansteigende Scherkraftwirkung zwischen dem Haftkleberelement und dem Bauteil die Adhäsionswirkung unterbrochen wird, und das Bauteil freigegeben wird.

Dadurch, daß das Klebe-Steckprofil zusammen mit dem Haftkleberelement und den in den Steckprofilwänden vorgesehenen Fasersträngen in einem Koextrusionsverfahren hergestellt werden kann, werden die Herstellungskosten für das erfindungsgemäße Klebe-Steckprofil erheblich verringert. Auch ist es möglich, die Schichtdicke der Haftkleberelemente beim Koextrusionsvorgang sehr dünn einzustellen, was zum einen eine Anpassung an verschiedene Anforderungen ermöglicht und andererseits kostensparend ist. Das erfindungsgemäße Klebe-Steckprofil enthält im wesentlichen keine Fremdstoffe, wie z.B. Metallarmierungen oder dgl., und ist daher vollkommen recyclebar.

## Patentansprüche

1. Steckprofil (10;110;210;310) aus Kunststoff zur Anbringung an einem Bauteil (34;134;234;334), insbesondere Kraftfahrzeugbauteil, umfassend:
- wenigstens eine langgestreckte Steckprofilwand (12,14; 162;212;214;312,314),
- wenigstens einen an die wenigstens eine Steckprofilwand (12,14;162;212;312,314) angeformten, sich in Längsrichtung der Steckprofilwand (12, 14;162;212, 214;312,314) erstreckenden Anlagesteg (22;122;222; 322), wobei der wenigstens eine Anlagesteg (22;122; 222;322) einen an der wenigstens einen Steckprofilwand (12,14;162;212,214;312, 314) angeformten Sockelbereich (24), einen sich an den Sockelbereich (24) anschließenden Biegebereich (26), sowie einen sich an den Biegebereich (26) anschließenden, eine Anlagefläche (30) zur Anlage an dem Bauteil (34;134; 234;334) aufweisenden Endbereich umfaßt, und wobei der Endbereich bei am Bauteil (34;134;234;334) angebrachtem Steckprofil (10;110;210;310) in zur Streckrichtung (S) des Steckprofils (10;110;210;310) entgegengesetzter Richtung weist und am Bauteil (34; 134;234;334) anliegt, um beim Abziehen des Steckprofils (10;110;210;310) vom Bauteil (34; 134;234;334) den Endbereich mit zunehmender Kraft gegen das Bauteil (34;134;234;334) zu drücken,
**dadurch gekennzeichnet,**
daß an der Anlagefläche (30) ein von einer Haftkleberschicht (32) gebildetes Reibungsverstärkungselement (32) vorgesehen ist, und daß die Haftkleberschicht (32) bei einem Extrusionsverfahren des Steckprofils (10; 110; 210; 310) mit dem wenigstens einen Anlagesteg (22; 122; 222; 322) in einem Koextrusionsvorgang auf die Anlagefläche (30) des wenigstens einen Anlagestegs (22; 122; 222; 322) aufgebracht ist.

2. Steckprofil nach Anspruch 1, dadurch gekennzeichnet, daß das Steckprofil (10;210;310) im wesentlichen U-förmig ausgebildet ist und zwei Steckprofilwände (12,14;212, 214;312,314) und einen aie Steckprofilwände (12,14;212, 214;312,314) verbindenden Steckprofilsteg (16;212;316) umfaßt, wobei der wenigstens eine Anlagesteg (22;122;322) an wenigstens einer der sich gegenüberliegenden Innenflächen (18,20) der beiden Steckprofilwände (12,14;212, 214;312,314) vorgesehen ist.

3. Steckprofil nach Anspruch 2, dadurch gekennzeichnet, daß an beiden sich gegenüberliegenden Innenflächen (18, 20) der Steckprofilwände (12,14;212,214; 312,314) jeweils wenigstens ein Anlagesteg (22) vorgesehen ist.

4. Steckprofil nach Anspruch 2, dadurch gekennzeichnet, daß an einer der beiden sich gegenüberliegenden Innenflächen (18,20) wenigstens ein Anlagesteg (312) vorgesehen ist, und daß an der anderen Fläche wenigstens ein Haftelement (394) vorgesehen ist.

5. Steckprofil nach einem der Ansprüche 2 bis 4, dadurch gekennzeichnet, daß der Endbereich (28) des wenigstens einen Anlagestegs (22;222;322) in einer Ausgangsstellung vor Anbringung am Bauteil (34;234;334) vom Biegebereich ausgehend entgegen der Steckrichtung (S) und zur jeweils gegenüberliegenden Steckprofilwand (18,22) hin geneigt verläuft.

6. Steckprofil nach einem der Ansprüche 2 bis 5, dadurch gekennzeichnet, daß an den freien Enden (40,42) der Steckprofilwände (12,14) jeweils nach innen in Richtung auf den Steckprofilsteg zu geneigte Einweisflächen (44, 46) vorgesehen sind.

7. Steckprofil nach einem der Ansprüche 2 bis 6, dadurch gekennzeichnet, daß an der Innenseite des Steckprofilstegs eine sich in Längsrichung des Steckprofils erstreckende Vertiefung vorgesehen ist, in welcher ein Haftkleberelement (52) angeordnet ist.

8. Steckprofil nach Anspruch 7, dadurch gekennzeichnet, daß die Vertiefung zwischen zwei in Längsrichtung des Steckprofils verlaufenden Rippen (48,56) gebildet ist.

9. Steckprofil nach einem der Ansprüche 2 bis 6, dadurch gekennzeichnet, daß an der Innenseite des Steckprofilstegs (216) und/oder einer der beiden Steckprofilseitenwände (214) wenigstens eine Anlagerippe (282,284) zur Anlage am Bauteil (234) vorgesehen ist, welche sich in Längsrichtung des Steckprofils (210) erstreckt.

10. Steckprofil nach Anspruch 1, dadurch gekennzeichnet, daß das Steckprofil nur eine Steckprofilwand (162) umfaßt.

11. Steckprofil nach Anspruch 10, dadurch gekennzeichnet, daß an den beiden Seitenflächen (164,166) der Steckprofilwand (162) jeweils wenigstens ein Anlagesteg (122) angeordnet ist.

12. Steckprofil nach Anspruch 10, dadurch gekennzeichnet, daß an einer Seitenfläche der Steckprofilwand wenigstens ein Anlagesteg angeordnet ist und daß an der anderen Seitenfläche wenigstens ein Haftelement angeordnet ist.

13. Steckprofil nach einem der Ansprüche 1 bis 12, dadurch gekennzeichnet, daß in wenigstens einer Steckprofilwand (12,14;162) und/oder einem die Steckprofilwände (12,14) verbindenden Steckprofilsteg (16) ein in Längsrichtung des Steckprofils verlaufender Längenstabilisator (56,58;176) angeordnet ist.

14. Steckprofil nach Anspruch 13, dadurch gekennzeichnet, daß der Längenstabilisator (56,58;176) einen Faserstrang (56,58;176) umfaßt.

15. Steckprofil nach einem der Ansprüche 13 oder 14, dadurch gekennzeichnet, daß der Volumenanteil des Längenstabilisators (56,58;176) am Steckprofil (10;110) weniger als 1% beträgt, vorzugsweise weniger als 0,5 %.

16. Steckprofil nach einem der Ansprüche 1 bis 15, dadurch gekennzeichnet, daß das Haftkleberelement (32,52) einen Haftschmelzkleber (32,52) umfaßt.

17. Steckprofil nach einem der Ansprüche 15 oder 16, dadurch gekennzeichnet, daß der Gewichtsanteil des Haftkleberelements (32,52) am Steckprofil (10) weniger als 4% beträgt, vorzugsweise weniger als 3%.

18. Steckprofil nach Anspruch 14 und einem der Ansprüche 15 bis 17, dadurch gekennzeichnet, daß der Faserstrang mit einer Haftschicht ummantelt ist, und daß der ummantelte Faserstrang (56,58;176) in das Steckprofil (10;110) einextrudiert ist .

19. Steckprofil nach einem der Ansprüche 1 bis 18, dadurch gekennzeichnet, daß der Biegebereich (26) einen Zwischenabschnitt des Anlagestegs (22) mit verringerter Dicke umfaßt.

20. Steckprofil nach einem der Ansprüche 2 bis 19, dadurch gekennzeichnet, daß das im wesentlichen U-förmige Steckprofil (310) zweiteilig ist aus einem im wesentlichen U-förmigen Trägerteil (390) mit zwei Seitenstegen (391,392) und einem die Seitenstege verbindenden Verbindungssteg, sowie einem in das U-förmige Trägerteil (390) einsetzbaren U-förmigen Einsatzteil (392), wobei das U-förmige Einsatzteil die beiden Steckprofilwände (312,314) mit dem wenigstens einen Anlagesteg (322) sowie den Steckprofilsteg (316) umfaßt.

21. Steckprofil nach Anspruch 20, dadurch gekennzeichnet, daß an das Trägerteil (390) ein Formteil (396) angeformt ist.

22. Steckprofil nach Anspruch 21, dadurch gekennzeichnet, daß das Formteil (396) durch Spritzguß an das Trägerteil (390) angeformt ist.

23. Steckprofil nach einem der Ansprüche 21 oder 22, dadurch gekennzeichnet, daß das Formteil (396) die freien Enden (395,397) der Trägerteilseitenstege (391,393) umgreift und Rastansätze (398,399) für das Einsatzteil (392) bildet.

24. Steckprofil nach einem der vorhergehenden Ansprüche, dadurch gekennzeichnet, daß an das Steckprofil (210) wenigstens ein weiterer Steckprofilabschnitt (278,280) zur Aufnahme eines weiteren Bauteils (235,286) angeformt ist.

25. Steckprofil nach einem der vorhergehenden Ansprüche, dadurch gekennzeichnet, daß an das Steckprofil (110) ein Dichtungsprofil (171) angeformt ist.

## Claims

1. Plug profile (10; 110; 210; 310) of plastics material for fitting onto a component (34; 134; 234; 334), especially automobile component, comprising:
- at least one elongate plug profile wall (12, 14; 162; 212; 214; 312, 314),
- at least one bearing web (22; 122; 222; 322), integrally formed on the at least one plug profile wall (12, 14; 162; 212; 312, 314), and extending in the longitudinal direction of the plug profile wall (12, 14; 162; 212, 214; 312, 314), wherein the at least one bearing web (22; 122; 222; 322) possesses a base zone (24) integrally formed on the at least one plug profile wall (12, 14; 162; 212, 214; 312, 314), a bending zone (26) adjoining the base zone (24) and also an end zone adjoining the bending zone (26), and possessing a bearing surface (30) for bearing against the component (34; 134; 234; 334), and wherein the end zone, when the plug profile (10; 110; 210; 310) is fitted onto the component (34; 134; 234; 334), points in a direction opposite to the plug-in direction (S) of the plug profile (10; 110; 210; 310), and bears against the component (34; 134; 234; 334), in order to press the end zone with increasing force against the component (34; 134; 234; 334) when the plug profile (10; 110; 210; 310) is being pulled off the component (34; 134; 234; 334),
characterized in that, on the bearing surface (30), a friction reinforcing element (32) formed of a layer of adhesive (32) is provided, and that the adhesive layer (32), in an extrusion process of the plug profile (10; 110; 210; 310) is applied onto the bearing surface (30) of the at least one bearing web (22; 122; 222; 322) together with the at least one bearing web (22; 122; 222; 322) in a co-extrusion operation.

2. Plug profile according to claim 1, characterized in that the plug profile (10; 210; 310) is of substantially U-section and possesses two plug profile walls (12, 14; 212, 214; 312, 314) and a plug profile web (16; 212; 316) connecting together the plug profile walls (12, 14; 212, 214; 312, 314), the at least one bearing web (22; 122; 322) being provided on at least one of the mutually opposite inner faces (18, 20) of the two plug profile walls (12, 14; 212, 214; 312, 314).

3. Plug profile according to claim 2, characterized in that, on each of the mutually opposite inner faces (18, 20) of the plug profile walls (12, 14; 212, 214; 312, 314), at least one bearing web (22) is provided.

4. Plug profile according to claim 2, characterized in that at least one bearing web (312) is provided on one of the two mutually opposite inner faces (18, 20), and that at least one bonding element (394) is provided on the other face.

5. Plug profile according to one of claims 2 to 4, characterized in that the end zone (28) of the at least one bearing web (22; 222; 322), in a starting position before fitting onto the component (34; 234; 334) extends obliquely from the bending zone in opposition to the plug direction (S) and towards the mutually opposite plug profile wall (18, 22).

6. Plug profile according to one of claims 2 to 5, characterized in that at each of the free ends (40, 42) of the plug profile walls (12, 14), a guide surface (44, 46) inclined inwards towards the plug profile web is provided.

7. Plug profile according to one of claims 2 to 6, characterized in that, on the inner face of the plug profile web, a depression extending in the longitudinal direction of the plug profile is provided, in which a bonding adhesive element (52) is disposed.

8. Plug profile according to claim 7, characterized in that the depression is formed between two ribs (48, 56) extending in the longitudinal direction of the plug profile.

9. Plug profile according to one of claims 2 to 6, characterized in that, on the inner face of the plug profile web (216) and/or of one of the two plug profile lateral walls (214), at least one bearing rib (282, 284) is provided for bearing against the component (234), which bearing rib extends in the longitudinal direction of the plug profile (210).

10. Plug profile according to claim 1, characterized in that the plug profile comprises only one plug profile wall (162).

11. Plug profile according to claim 10, characterized in that on each of the two lateral surfaces (164, 166) of the plug profile wall (162), at least one bearing web (122) is disposed.

12. Plug profile according to claim 10, characterized in that at least one bearing web is disposed on one lateral face of the plug profile wall and that at least one bonding element is disposed on the other lateral face.

13. Plug profile according to one of claims 1 to 12, characterized in that, in at least one plug profile wall (12, 14; 162) and/or a plug profile web (16) connecting the plug profile walls (12, 14) together, a length stabilizer (56, 58; 176) extending in the longitudinal direction of the plug profile is disposed.

14. Plug profile according to claim 13, characterized in that the length stabilizer (56, 58; 176) comprises a fibre strand (56, 58; 176).

15. Plug profile according to one of claims 13 or 14, characterized in that the proportion by volume of the length stabilizer (56, 58; 176) to the plug profile (10; 110) is less than 1%, preferably less than 0.5%.

16. Plug profile according to one of claims 1 to 15, characterized in that the bonding adhesive element (32, 52) comprises a fusing adhesive (32, 52).

17. Plug profile according to one of claims 15 or 16, characterized in that the proportion by weight of the bonding adhesive element (32, 52) to the plug profile (10) is less than 4%, preferably less than 3%.

18. Plug profile according to claim 14 and one of claims 5 to 7, characterized in that the fibre strand is sheathed in a bonding coating and that the sheathed fibre strand (56, 58; 176) is extruded into the plug profile (10, 110).

19. Plug profile according to one of claims 1 to 18, characterized in that the bending zone (26) comprises an intermediate portion of the bearing web (22) of reduced thickness.

20. Plug profile according to one of claims 2 to 19, characterized in that the substantially U-section plug profile (310) is in two parts, consisting of a substantially U-section beam part (390) having two lateral webs (391, 392) and a connecting web connecting together the lateral webs, and of a U-section insert part (392) which can be inserted into the U-section beam part (390), the U-section insert part comprising the two plug profile walls (312, 314) with the at least one bearing web (322), and also the plug profile web (316).

21. Plug profile according to claim 20, characterized in that a moulding (396) is integrally moulded onto the beam part (390).

22. Plug profile according to claim 21, characterized in that the moulding (396) is integrally moulded onto the beam part (390) by injection moulding.

23. Plug profile according to one of claims 21 or 22, characterized in that the moulding (396) fits around the free ends (395, 397) of the beam part lateral webs (391, 393) and forms detent projections (398, 399) for the insert part (392).

24. Plug profile according to one of the preceding claims, characterized in that at least one further plug profile portion (278, 280) for receiving a further component (235, 286) is integrally moulded onto the plug profile (210).

25. Plug profile according to one of the preceding claims, characterized in that a sealing profile (171) is integrally moulded onto the plug profile (110).

## Revendications

1. Profilé de connexion (10 ; 110 ; 210 ; 310) en matière synthétique destiné à être appliqué sur un composent (34 ; 134 ; 324 ; 334), en particulier un composent de véhicule automobile, comprenant :
- au moins une paroi de profilé de connexion (12, 14 ; 162 ; 212 ; 214 ; 312, 314) allongée,
- au moins une barrette d'application (22 ; 122 ; 222 ; 322) formée sur la paroi du profilé de connexion (12, 14 ; 162 ; 212 ; 312, 314) au nombre d'au moins une, s'étendant dans la direction longitudinale de la paroi du profité de connexion (12, 14 ; 162 ; 212 ; 214 ; 312, 314), la barrette d'application (22 ; 122 ; 222 ; 322) au nombre d'au moins une comprenant une zone formant socle (24), formée sur le paroi du profité de connexion (12 ; 14 ; 162 ; 212 ; 214 ; 312 ; 314) au nombre d'au moins une, une zone de flexion (26) se raccordant à la zone formant socle (24), ainsi qu'une zone d'extrémité se raccordant à la zone de flexion (26), présentant une surface d'application (30) destinée à s'appliquer contre le composant (34 ; 134 ; 234 ; 334), et la zone d'extrémité étant dirigée dans un sens opposé au sens d'enfichage (S) du profité de connexion (10 ; 110 ; 210 ; 310), et s'appliquant contre le composant (34 ; 134 ; 234 ; 334), lorsque le profité de connexion (10 ; 110 ; 210 ; 310) est appliqué contre le composant (34 ; 134 ; 234 ; 334), afin de presser la zone d'extrémité avec une force croissante contre le composant (34 ; 134 ; 234 ; 334), lorsque le profilé de connexion (10 ; 110 ; 210 ; 310) est retiré du composant (34 ; 134 ; 234 ; 334),
caractérisé
en ce qu'il est prévu sur la surface d'application (30) un élément de renforcement de friction (32), formé par une couche de colle adhésive (32), et en ce que la couche de colle adhésive (32) est appliquée, au cours d'un procédé d'extrusion du profilé de connexion (10 ; 110 ; 210 ; 310), avec la barrette d'application (22 ; 122 ; 222 ; 322) au nombre d'au moins une, en une opération de co-extrusion, sur la surface d'application (30) de la barrette d'application (22 ; 122 ; 222 ; 322) au nombre d'au moins une.

2. Profité de connexion selon la revendication 1, caractérisé en ce que le profilé de connexion (10 ; 210 ; 310) est sensiblement en forme de U et comprend deux parois de profilé de connexion (12, 14 ; 212, 214 ; 312, 314) et une entretoise de profilé de connexion (16 ; 212 ; 316), reliant les parois de profilé de connexion (12, 14 ; 212, 214 ; 312, 314), la barrette d'application (22 ; 122 ; 322) au nombre d'au moins une étant prévue sur au moins l'une des surfaces intérieures (18, 20) opposées l'une à l'autre des deux parois du profilé de connexion (12, 14 ; 212, 214 ; 312, 314).

3. Profilé de connexion selon la revendication 2, caractérisé en ce qu'il est prévu au moins une barrette d'application (22) sur chacune des deux surfaces intérieures (18, 20) opposées l'une à l'autre des parois du profilé de connexion (12, 14 ; 212, 214 ; 312, 314).

4. Profilé de connexion selon la revendication 2, caractérisé en ce qu'il est prévu au moins une barrette d'application (312) sur l'une des deux surfaces intérieures (18, 20) opposées l'une à l'autre, et en ce que sur l'autre surface il est prévu au moins un élément adhésif (394).

5. Profilé de connexion selon l'une des revendications 2 à 4, caractérisé en ce que la zone d'extrémité (28) de la barrette d'application (22 ; 222 ; 322) au nombre d'au moins une s'étend inclinée dans une position initiale avant application sur le composant (34 ; 234 ; 334), à partir de la zone de flexion, dans le sens opposé au sens d'enfichage (S) et vers la paroi du profilé de connexion (18, 22) respectivement opposée.

6. Profilé de connexion selon l'une des revendications 2 à 5, caractérisé en ce qu'aux extrémités libres (40, 42) des parois (12, 14) du profilé de connexion sont prévues chaque fois des surfaces de guidage (44, 46) inclinées chacune vers l'intérieur en direction de l'entretoise du profilé de connexion.

7. Profilé de connexion selon l'une des revendications 2 à 6, caractérisé en ce que sur le coté intérieur de l'entretoise du profilé de connexion est prévu un enfoncement s'étendant dans la direction longitudinale du profilé de connexion, dans lequel est placé un élément à colle adhésive (52).

8. Profilé de connexion selon la revendication 7, caractérisé en ce que l'enfoncement est formé entre deux nervures (48, 56) s'étendant dans la direction longitudinale du profilé de connexion.

9. Profilé de connexion selon l'une des revendications 2 à 6, caractérisé en ce que sur le côté intérieur de l'entretoise (216) du profilé de connexion et/ou l'une des deux parois latérales (214) du profilé de connexion est prévue au moins une nervure d'application (282, 284) destinée à s'appliquer contre le composant (234), qui s'étend dans la direction longitudinale du profilé de connexion (210).

10. Profilé de connexion selon la revendication 1, caractérisé en ce que le profilé de connexion ne comprend qu'une paroi (162) du profilé de connexion.

11. Profilé de connexion selon la revendication 10, caractérisé en ce que sur chacune des deux surfaces latérales (164, 166) de la paroi (162) du profilé de connexion est placée au moins une barrette d'application (122).

12. Profilé de connexion selon la revendication 10, caractérisé en ce que sur une surface latérale de la paroi du profilé de connexion est placée au moins une barrette d'application et en ce que sur l'autre surface latérale est placé au moins un élément adhésif.

13. Profilé de connexion selon l'une des revendications 1 à 12, caractérisé en ce que dans au moins une paroi (12, 14 ; 162) du profilé de connexion et/ou une entretoise (16) du profité de connexion, reliant les parois (12, 14) du profilé de connexion, est placé un stabilisateur de longueur (56, 58 ; 176), s'étendant dans la direction longitudinale du profilé de connexion.

14. Profilé de connexion selon la revendication 13, caractérisé en ce que le stabilisateur de longueur (56, 58 ; 176) comprend une corde de fibres (56, 58 ; 176).

15. Profilé de connexion selon l'une des revendications 13 ou 14, caractérisé en ce que la part du volume du stabilisateur de longueur (56, 58 ; 176) dans le profité de connexion (10 ; 110) est inférieure à 1 %, de préférence inférieure à 0,5 %.

16. Profilé de connexion selon l'une des revendications 1 à 15, caractérisé en ce que l'élément à colle adhésive (32, 52) comprend une colle fusible adhésive (32, 52).

17. Profilé de connexion selon l'une des revendications 15 ou 16, caractérisé en ce que la part en poids de l'élément à colle adhésive (32, 52) dans le profilé de connexion (10) est inférieure à 4 %, de préférence inférieure à 3 %.

18. Profilé de connexion selon la revendication 14 et l'une des revendications 15 à 17, caractérisé en ce que la corde de fibres est gainée d'une couche adhésive, et en ce que la corde de fibres (56, 58 ; 176) gainée est extrudée dans le profilé de connexion (10 ; 110).

19. Profilé de connexion selon l'une des revendications 1 à 18, caractérisé en ce que la zone de flexion (26) comprend une portion intermédiaire de la barrette d'application (22) d'épaisseur réduite.

20. Profilé de connexion selon l'une des revendications 2 à 19, caractérisé en ce que le profilé de connexion (310), sensiblement en forme de U, est fait de deux parties, d'un élément de support (390) sensiblement en forme de U avec deux branches latérales (391, 392) et une barrette de liaison reliant les branches latérales, ainsi que d'un insert (392) en forme de U, à insérer dans l'élément de support (390) en forme de U, l'insert en forme de U comprenant les deux parois (312, 314) du profilé de connexion avec la barrette d'application (322) au nombre d'au moins une ainsi que l'entretoise (316) du profilé de connexion.

21. Profilé de connexion selon la revendication 20, caractérisé en ce que sur l'élément de support (390) est formé un élément moulé (396).

22. Profilé de connexion selon la revendication 21, caractérisé en ce que l'élément moulé (396) est moulé par injection sur l'élément de support (390).

23. Profilé de connexion selon l'une des revendications 21 ou 22, caractérisé en ce que l'élément moulé (396) entoure les extrémités libres (395, 397) des branches latérales (391, 393) de l'élément de support et forme des appendices d'accrochage (398, 399) pour l'insert (392).

24. Profilé de connexion selon l'une des revendications précédentes, caractérisé en ce que sur le profilé de connexion (210) est formée au moins une autre portion (278, 280) du profilé de connexion destinée à recevoir un autre composant (235, 286).

25. Profilé de connexion selon l'une des revendications précédentes, caractérisé en ce que sur le profilé de connexion (110) est formé un profilé d'étancheité (171).
